# EUROPÄISCHE PATENTANMELDUNG

(11) **EP 1 396 376 A1**
(43) Veröffentlichungstag der Anmeldung: **10.03.2004**
(21) Anmeldenummer: 03090287.8
(22) Anmeldetag: 05.09.2003
(51) Int. Cl.: B60L 5/19

(54) **Neigeeinrichtung für einen Stromabnehmer**

(30) Priorität: 05.09.2002 DE 10240964
(71) Anmelder: Bombardier Transportation GmbH, 13627 Berlin (DE)
(72) Erfinder: Jäger, Karl, 88090 Immenstaad (DE)
(74) Vertreter: COHAUSZ & FLORACK

(57) **Zusammenfassung**

Neigeeinrichtung für einen Stromabnehmer (2) eines Fahrzeugs mit einem gegenüber einem Fahrweg neigbaren Wagenkasten (1), insbesondere eines Schienenfahrzeugs, mit einem Neigeschlitten (3) zur Aufnahme des Stromabnehmers (2), der über wenigstens ein Führungselement (6, 6') durch wenigstens eine mit dem Wagenkasten (1) verbindbare Führungsbahn (5, 5') geführt ist, die zur im Wesentlichen fahrwegfesten Ausrichtung des Stromabnehmers (2) ausgebildet ist, wobei die Führungsbahn (5, 5') wenigstens einen benachbart der Hochachse (7) des Wagenkastens (1) angeordneten ersten Führungsabschnitt (5.3) aufweist, der sich zur Hochachse (7) des Wagenkastens (1) hin von einer senkrecht zur Hochachse (7) des Wagenkastens (1) stehenden Bezugsebene (8) entfernt, wobei er einen linearen oder zur Bezugsebene (8) hin gewölbten Verlauf aufweist.

## Beschreibung

Die vorliegende Erfindung betrifft eine Neigeeinrichtung für einen Stromabnehmer eines Fahrzeugs mit einem gegenüber einem Fahrweg neigbaren Wagenkasten, insbesondere für einen Stromabnehmer eines Schienenfahrzeugs, mit einem Neigeschlitten zur Aufnahme des Stromabnehmers, der über wenigstens ein Führungselement durch wenigstens eine mit dem Wagenkasten verbindbare Führungsbahn geführt ist, die zur im Wesentlichen fahrwegfesten Ausrichtung des Stromabnehmers ausgebildet ist

Bei elektrisch angetriebenen Neigezügen ist es in der Regel erforderlich, dass die Wagenkastenneigung von den darauf montierten Stromabnehmern kompensiert wird, damit der Kontakt zum Fahrdraht erhalten bleibt. Mit anderen Worten dürfen sich die Stromabnehmer bezogen zum Gleis nicht mit neigen, weshalb sie bei einer Neigung des Wagenkastens entsprechend ausgerichtet werden müssen, um sie in einer so genannten fahrwegfesten bzw. gleisfesten Position zu halten.

Um dies zu erreichen gibt es verschiedene Möglichkeiten. Bei einer bekannten Lösung sitzt der Stromabnehmer auf einem Rahmen, der am Drehgestell befestigt ist und somit der Wagenkasten-Neigung nicht folgt. Ein ähnliches Prinzip ist in der DE 196 21 008 A1 realisiert worden. Diese Ausführung hat einerseits den Vorteil, dass der Stromabnehmer immer gleisfest bleibt und nicht aktiv bewegt werden muss, aber andererseits den Nachteil, dass im Wagenkasten ein relativ hoher Platzbedarf für das Rahmengestänge besteht. Dies schränkt den Nutzraum des Fahrzeuges ein.

Aus diesem Grunde werden alle neueren Fahrzeuge mit einem aktiven Neigesystem, auf dem der Stromabnehmer sitzt, ausgerüstet. Derartige Neigesysteme sind beispielsweise in der EP 0 841 207 A2, der DE 196 18 747 C1, der DE-OS 22 43 405, der DE 32 32 153 C2, der EP 1 078 806 A1 und der DE 198 52 639 A1 beschrieben.

Aus der EP 0 955 202 A2 und der EP 0 436 993 A1 sind jeweils gattungsgemäße Neigeeinrichtungen bekannt, bei denen der Neigeschlitten durch eine nach oben gewölbte bogenförmige geführt wird.

Problematisch bei diesen aktiven Stromabnehmer-Neigesystemen ist die Bauhöhe der Mechanik. Meistens ist die Neigebahn, auf der der Stromabnehmer bewegbar ist, als Kreissegment, mit dem Mittelpunkt im Momentanzentrum des Wagenkastens, ausgeführt, oder der Stromabnehmer sitzt auf einer Struktur, die seitwärts bewegt und gekippt werden kann. Da die Oberkante des gesenkten Stromabnehmers nach UIC 505 nicht über ein bestimmtes Maß nach oben hinausgehen darf, kann der zusätzlich für das Neigesystem erforderliche Bauraum nur durch ein Absenken der Wagenkastendecke zur Verfügung gestellt werden. Andererseits gibt es aber für die Mindesthöhe des Innenraums ebenfalls Vorgaben, die nicht unterschritten werden dürfen.

Dieses Problem wird dann noch weiter verschärft, wenn man beispielsweise ein Fahrzeug für den Betrieb in einem 25 kV-Netz auslegen soll. Hierbei muss die isolierende Luftstrecke zwischen dem Stromabnehmer und der Neigeplattform von 175 mm auf 230 mm vergrößert werden. Daher ist es wünschenswert über ein Neigesystem mit sehr geringer Bauhöhe zu verfügen.

Ein weiterer Nachteil dieser gattungsgemäßen Neigeeinrichtungen liegt in der vergleichsweise aufwändigen Rückstelleinrichtungen, die erforderlich sind, um den Stromabnehmer bei nicht geneigtem Wagenkasten auch dann in seine Mittelstellung zurück zu führen, wenn der eigentliche Stellantrieb für den Neigeschlitten ausgefallen ist.

Der vorliegenden Erfindung liegt daher die Aufgabe zu Grunde, eine Neigeeinrichtung der eingangs genannten Art zur Verfügung zu stellen, welche die oben genannten Nachteile nicht oder zumindest in geringerem Maße aufweist und insbesondere bei möglichst geringer Bauhöhe eine zuverlässige und einfache Rückstellung des Stromabnehmers in seine Mittelstellung ermöglicht.

Die vorliegende Erfindung löst diese Aufgabe ausgehend von einer Neigeeinrichtung gemäß dem Oberbegriff des Anspruchs 1 durch die im kennzeichnenden Teil des Anspruchs 1 angegebenen Merkmale.

Der vorliegenden Erfindung liegt die technische Lehre zu Grunde, dass man bei einer gattungsgemäßen Neigeeinrichtung eine besonders geringe Bauhöhe und selbst bei Ausfall des Stellantriebs für den Neigeschlitten eine zuverlässige Rückstellung des Stromabnehmers in die Mittelstellung erzielen kann, wenn die Führungsbahn wenigstens einen benachbart der Hochachse des Wagenkastens angeordneten ersten Führungsabschnitt aufweist, der sich zur Hochachse des Wagenkastens hin von einer senkrecht zur Hochachse des Wagenkastens stehenden Bezugsebene entfernt, wobei er einen linearen oder zur Bezugsebene hin gewölbten Verlauf aufweist.

Der lineare bzw. zur Bezugsebene hin gewölbte Verlauf des ersten Führungsabschnitts in einem der Hochachse des Wagenkastens benachbarten Bereich ermöglicht dabei anders als der bekannte, über die gesamte Führungsbahn von der Bezugebene weg gewölbte Verlauf in vorteilhafter Weise zum einen eine Gestaltung, mit einer sich selbst auf Grund der Schwerkraft einstellenden stabilen Position des Neigeschlittens, die problemlos so gewählt werden kann, dass sie bei der Mittelstellung des Stromabnehmers erreicht wird.

Weiterhin ist hiermit eine besonders niedrig bauende Gesamtanordnung möglich, bei der unter anderem erreicht werden kann, dass der Neigeschlitten und damit auch ein darauf zu montierender Stromabnehmer in der Mittelstellung seine tiefste Stellung im gesamten Bewegungsablauf einnimmt.

Der Neigeschlitten kann grundsätzlich in beliebiger geeigneter Weise gestaltet sein. Weiterhin kann er aus einem Metall und/oder aus einem elektrisch isolierenden Material aufgebaut sein. Auch das Führungselement kann grundsätzlich in beliebiger geeigneter Weise gestaltet sein. Bevorzugt handelt es sich um eine einfache Führungsrolle, die unmittelbar am Neigeschlitten gelagert ist. Es sind jedoch auch komplexere Gestaltungen des Führungselements, z. B. mit mehreren Führungsrollen möglich, wie sie beispielsweise aus der EP 0 955 202 A2 bekannt ist. Das Führungselement ist in der Rede entsprechend der Gestaltung der Führungsbahn so gewählt, dass eine zuverlässige Führung gewährleistet ist sowie ein Abheben des Führungselements von der Führungsbahn sicher verhindert ist.

Bevorzugt weist die Führungsbahn einen zweiten Führungsabschnitt auf, der auf der der Hochachse abgewandten Seite des ersten Führungsabschnitts an den ersten Führungsabschnitt angrenzt und einen Verlauf aufweist, der vom Verlauf des ersten Führungsabschnitts abweicht. Hierdurch lässt sich in besonders einfacher Weise eine definierte stabile Position des Neigeschlittens erzielen, bei der das Führungselement dann im Bereich des Übergangs zwischen dem ersten Führungsabschnitt und dem zweiten Führungsabschnitt angeordnet ist.

Dabei kann der zweite Führungsabschnitt einen Krümmungsverlauf aufweisen, der sich vom Krümmungsverlauf des ersten Führungsabschnitts unterscheidet, wodurch die selbsttätige Einstellung in die stabile Position noch unterstützt wird. Weist der zweite Führungsabschnitt beispielsweise eine geringere Neigung zur Bezugsebene auf als der ersten Führungsabschnitt, so muss das Führungselement bei einer Bewegung in Richtung der Hochachse des Wagenkastens beginnend am Übergang zwischen dem zweiten Führungsabschnitt und dem ersten Führungsabschnitt eine größere Steigerung überwinden, wodurch die Bewegung gebremst bzw. gestoppt wird.

Bei besonders einfach gestalteten Varianten der erfindungsgemäßen Neigeeinrichtung, bei denen dieser Effekt zudem besonders gut zum Tragen kommt, verläuft der zweite Führungsabschnitt parallel zur Bezugsebene.

Wie bereits erwähnt, lässt sich der Übergang zwischen dem ersten Führungsabschnitt und dem zweiten Führungsabschnitt besonders gut dazu nutzen, im Zusammenwirken mit dem Führungselement eine stabile Position des Neigeschlittens zu definieren. Vorzugsweise ist daher vorgesehen dass das Führungselement in der bei nicht geneigtem Wagenkasten einzunehmenden Mittelstellung des Neigeschlittens im Übergangsbereich zwischen dem ersten Führungsabschnitt und dem zweiten Führungsabschnitt angeordnet ist.

Um die stabile Positionierung in diesem Bereich zu unterstützen und gleichzeitig die Belastungen für das Führungselement in vertretbaren Grenzen zu halten, ist der Übergangsbereich zwischen den Führungsabschnitten bevorzugt an die Kontaktgeometrie des Führungselements angepasst. Bei der Verwendung von Führungsrollen ist die Führungsbahn hierzu beispielsweise mit einem Krümmungsradius ausgeführt, der etwa dem Radius der Führungsrolle entspricht oder größer als dieser Radius ist.

Die oben beschriebenen Funktionen und Gestaltungen der Führungsbahn lassen sich grundsätzlich mit einer beliebigen geeigneten Führungseinrichtung als Gegenstück auf der der Hochachse gegenüberliegenden Seite des Wagenkastens realisieren. Wegen des besonders einfachen Aufbaus wird jedoch bevorzugt eine zur Hochachse des Wagenkastens symmetrische Anordnung gewählt. Bevorzugt ist daher ein dritter Führungsabschnitt vorgesehen ist, der bezüglich der Hochachse des Wagenkastens symmetrisch zum ersten Führungsabschnitt ausgebildet ist. Dieser dritte Führungsabschnitt kann dabei an der ersten Führungsbahn ausgebildet sein. Es kann hierfür jedoch auch eine gesonderte zweite Führungsbahn vorgesehen sein, an der der dritte Führungsabschnitt ausgebildet ist.

Gleiches gilt für ein symmetrisches Gegenstück zum zweiten Führungsabschnitt. Vorzugsweise ist daher ein vierter Führungsabschnitt vorgesehen, der bezüglich der Hochachse des Wagenkastens symmetrisch zum zweiten Führungsabschnitt ausgebildet ist, wobei auch hier wiederum der vierte Führungsabschnitt an der ersten Führungsbahn oder an einer zweiten Führungsbahn ausgebildet sein kann.

Der Verlauf der jeweiligen Führungsbahn kann grundsätzlich frei nach der jeweils zu erzielenden Neigebewegung des zu montierenden Stromabnehmers gewählt werden. Im Hinblick auf die Kontaktverhältnisse zwischen Stromabnehmer und Fahrdraht besonders günstige Neigeverhältnisse ergeben sich bei bevorzugten Varianten der erfindungsgemäßen Neigeeinrichtung, bei denen wenigstens eine Führungsbahn derart ausgebildet und angeordnet ist, dass die Mittelachse des Stromabnehmers unabhängig von der Neigeposition durch das Momentanzentrum der Neigungsbewegung des Wagenkastens verläuft.

Vorzugsweise ist weiterhin vorgesehen, dass der Neigeschlitten und die wenigstens eine Führungsbahn zur exakten Kompensation der Neigung des Wagenkastens am Stromabnehmer ausgebildet sind, da sich hiermit optimierte Kontaktverhältnisse erzielen lassen.

Der erste und zweite Führungsabschnitt können in Abhängigkeit von der gewünschten Neigecharakteristik grundsätzlich beliebig gestaltet sein. Insbesondere können sie gegebenenfalls auch übergangslos aneinander anschließen. So können der erste Führungsabschnitt und der zweite Führungsabschnitt eine geradlinige Führung ausbilden. Ebenso können sie eine kurvenbahnförmige Führung, beispielsweise mit stetig wachsender Steigung ausbilden. Insbesondere können sie dabei eine kreisbahnförmige Führung ausbilden.

Wie bereits oben erwähnt, ist bei besonders bevorzugten Varianten der erfindungsgemäßen Neigeeinrichtung vorgesehen, dass die mindestens eine Führungsbahn derart ausgebildet ist, dass die Rückstellung des Neigeschlittens in seine bei nicht geneigtem Wagenkasten einzunehmende Mittelstellung durch die Schwerkraft zumindest unterstützt wird, sodass eventuell erforderliche zusätzliche Rückstellmittel entsprechend einfach und klein dimensioniert werden können. Bevorzugt ist die Gestaltung so gewählt, dass eine allein schwerkraftbedingte Rückstellung in die Mittelstellung erfolgt, sodass keine zusätzlichen Rückstellmittel erforderlich sind.

Die Auslenkung des Neigeschlittens bei geneigtem Wagenkasten kann grundsätzlich auf beliebige geeignete Weise durch entsprechende Aktuatoren oder Koppelelemente erzielt werden. Bevorzugt ist wenigstens ein mit dem Neigeschlitten verbundenes Stellglied vorgesehen, das zumindest zur Unterstützung der Auslenkung und/oder Rückstellung des Neigeschlittens ausgebildet ist. Dieses Stellglied wird bevorzugt von einem Wagenkasten-Neigerechner angesteuert. Hierbei kann es sich um ein elektrisches, hydraulisches und/oder pneumatisches Stellglied handeln. Weiterhin ist bevorzugt ein Sensor vorgesehen, der die Istposition des Neigeschlittens erfasst und an den Wagenkasten-Neigerechner zurückmeldet, um eine Regelung zu ermöglichen.

Eine besonders geringe Bauhöhe lässt sich mit bevorzugten Varianten der erfindungsgemäßen Neigeeinrichtung erzielen, bei denen die Führungsbahn (5) durch eine nut- oder schlitzförmige Ausnehmung eines Führungskörpers gebildet ist, in der das Führungselement geführt ist. Mit einem einzigen Bauteil, nämlich dem gegebenenfalls sehr einfach gestalteten Führungskörper, kann hierbei die Führung des Führungselements in nahezu sämtlichen Raumrichtungen sichergestellt werden, sodass sich zusätzliche Führungseinrichtungen weit gehend erübrigen.

Die vorliegende Erfindung betrifft weiterhin ein Fahrzeug, insbesondere ein Schienenfahrzeug, mit einem gegenüber einem Fahrweg neigbaren Wagenkasten und einen Stromabnehmer, die über eine erfindungsgemäße Neigeeinrichtung miteinander verbunden sind.

Weitere bevorzugte Ausgestaltungen der Erfindung ergeben sich aus den Unteransprüchen bzw. der nachstehenden Beschreibung eines bevorzugten Ausführungsbeispiels, welche auf die beigefügten Zeichnungen Bezug nimmt. Es zeigen
- Figur 1: eine schematische Darstellung einer bevorzugten Ausführungsform der erfindungsgemäßen Neigeeinrichtung bei nicht geneigtem Wagenkasten;
- Figur 2: eine schematische Darstellung der Neigeeinrichtung aus Figur 1 bei geneigtem Wagenkasten;
- Figur 3A bis 3C: schematische Teildarstellungen weiterer bevorzugter Ausführungsformen der erfindungsgemäßen Neigeeinrichtung.

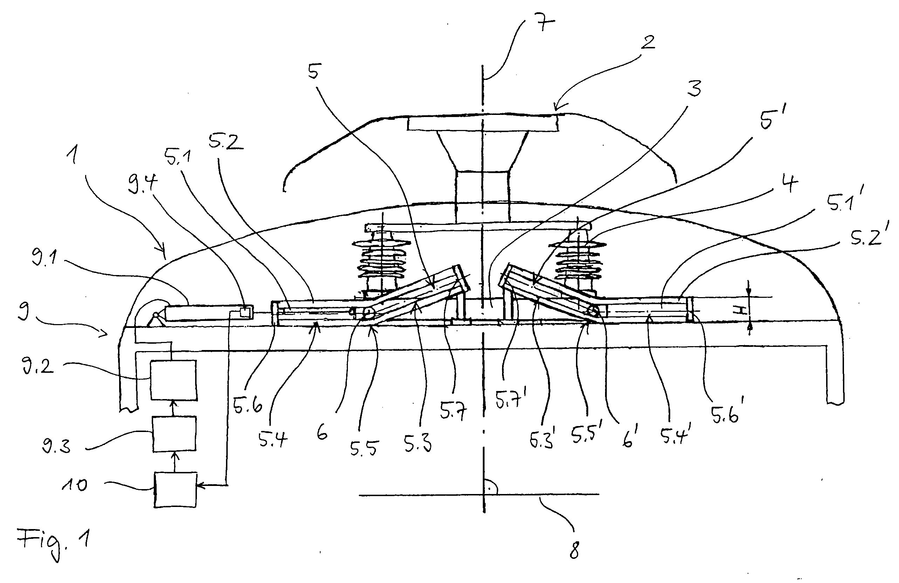

Figur 1 zeigt eine schematische Darstellung einer bevorzugten Ausführungsform der erfindungsgemäßen Neigeeinrichtung bei nicht geneigtem Wagenkasten;

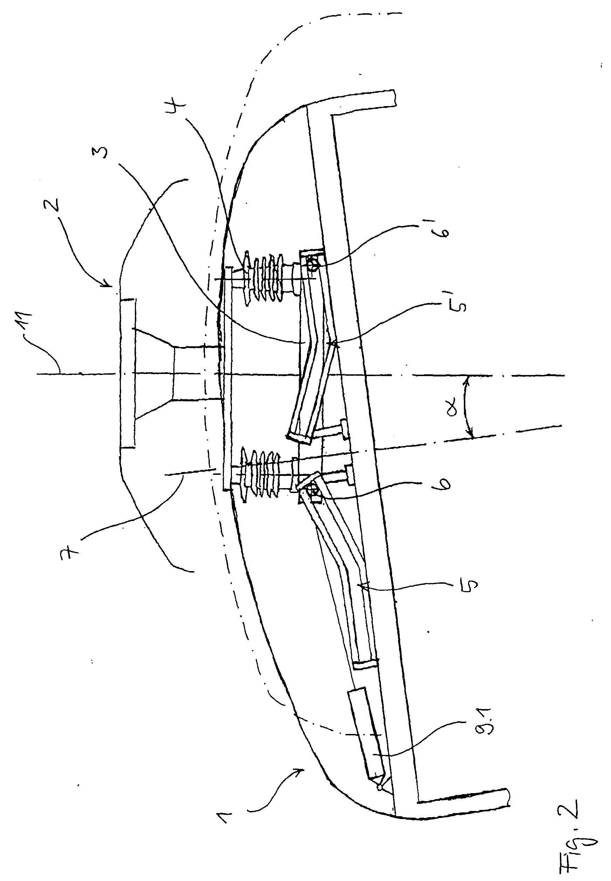

Die Figuren 1 und 2 zeigen einen Teil eines elektrisch angetriebenen Schienenfahrzeugs, dessen Wagenkasten 1 beispielsweise bei Bogendurchfahrten in Querrichtung neigbar ist. Im Dachbereich des Wagenkastens 1 ist eine Neigeeinrichtung für einen daran angeordneten Stromabnehmer 2 angeordnet.

Die Neigeeinrichtung umfasst einen Neigeschlitten 3, der mit dem Stromabnehmer 2 über Isolatoren 4 verbunden ist. Der Neigeschlitten 3 kann aus Metall oder aus einem elektrisch isolierenden Material bestehen.

Die Neigeeinrichtung umfasst weiterhin eine erste Führungsbahn 5 und eine zweite Führungsbahn 5', die am Wagenkasten 1 angeordnet und befestigt sind. Die jeweilige Führungsbahn 5 bzw. 5' ist durch eine schlitzförmige Ausnehmung 5.1 bzw. 5.1' in einem Führungskörper 5.2 bzw. 5.2' ausgebildet. In der ersten Ausnehmung 5.1 des ersten Führungskörpers 5.2 ist ein Führungselement in Form einer ersten Führungsrolle 6 geführt, die drehbar am Neigeschlittens 3 befestigt ist. Gleichermaßen ist in der zweiten Ausnehmung 5.1' des zweiten Führungskörpers 5.2' ein Führungselement in Form einer zweiten Führungsrolle 6' geführt, die drehbar am Neigeschlitten 3 befestigt ist.

Im gezeigten Beispiel ist eine zur Zeichnungsebene symmetrische Anordnung mit vier Führungsbahnen vorgesehen, bei welcher der Neigeschlitten 3 über je eine Führungsrolle an den in Fahrtrichtung vorlaufenden Schlittenecken und den in Fahrtrichtung nachlaufenden Schlittenecken geführt wird. Es versteht sich jedoch, dass bei anderen Varianten der Erfindung auch eine andere Konfiguration gewählt sein kann. So kann der Neigeschlitten über drei Rollen, zwei seitlich am vorlaufenden Ende - ähnlich der in Figur 1 dargestellten Konfiguration - und eine mittig am nachlaufenden Ende des Neigeschlittens.

Die vier Führungsbahnen dienen in diesem Ausführungsbeispiel zusätzlich dazu, den Neigeschlitten 3 in Fahrtrichtung zu halten, damit die aerodynamischen Kräfte vom Stromabnehmer 2 auf den Wagenkasten 1 übertragen werden können. Des weiteren können die Führungsbahnen durch die schlitzförmige Gestaltung auf den Neigeschlitten 3 wirkende Abhebekräfte aufnehmen.

Wie aus Figur eines deutlich wird, entspricht die für die Neigeeinrichtung zusätzlich erforderliche Bauhöhe lediglich der Höhe H der Führungsbahnen 5 bzw. 5' im Bereich des zweiten bzw. vierten Führungsabschnitts 5.4 bzw. 5.4', sodass mit der erfindungsgemäßen Lösung offensichtlich eine besonders niedrig bauende Neigeeinrichtung erzielt werden kann.

Die erste Führungsbahn 5 weist einen ersten Führungsabschnitt 5.3 auf, der benachbart zur Hochachse 7 des Wagenkastens 1 angeordnet ist. Dieser erste Führungsabschnitt 5.3 entfernt sich zur Hochachse 7 hin zunehmend von einer senkrecht zur Hochachse 7 stehenden Bezugsebene 8. Der erste Führungsabschnitt 5.3 ist im vorliegenden Beispiel linear ausgebildet. Es versteht sich jedoch, dass er bei anderen Varianten der Erfindung auch einen zur Bezugsebene hin gewölbten Verlauf aufweisen kann.

Die erste Führungsbahn 5 weist weiterhin einen linearen zweiten Führungsabschnitt 5.4 auf, der auf der der Hochachse 7 abgewandten Seite des ersten Führungsabschnitts 5.3 0 an den ersten Führungsabschnitt 5.3 in einem ersten Übergangsbereich 5.5 angrenzt. Auch hier versteht es sich, dass der zweite Führungsabschnitt bei anderen Varianten der Erfindung auch nicht in linearen Verlauf aufweisen kann.

Die zweite Führungsbahn 5' ist bezüglich der Hochachse 7 symmetrisch zur ersten Führungsbahn 5 ausgebildet und angeordnet. Die zweite Führungsbahn 5' weist dabei einen linearen dritten Führungsabschnitt 5.3' auf, der benachbart zur Hochachse 7 des Wagenkastens 1 angeordnet ist. Dieser erste Führungsabschnitt 5.3' entfernt sich zur Hochachse 7 hin ebenfalls zunehmend von der Bezugsebene 8. Die zweite Führungsbahn 5' weist weiterhin einen linearen vierten Führungsabschnitt 5.4' auf, der auf der der Hochachse 7 abgewandten Seite des dritten Führungsabschnitts 5.3' an den dritten Führungsabschnitt 5.3' in einem zweiten Übergangsbereich 5.5' angrenzt.

In der in Figur 1 dargestellten Mittelstellung des Neigeschlittens 3 bei nicht geneigtem Wagenkasten 1 befindet sich die erste Führungsrolle 6 im ersten Übergangsbereich 5.5, während sich die zweite Führungsrolle 6' im zweiten Übergangsbereich 5.5' befindet. Hierdurch ist der Neigeschlitten 3, so in den Führungsbahnen 5 und 5' geführt, dass er in der Mittelstellung seine tiefste Position bezüglich des Wagenkastens 1 einnimmt.

Bei Neigebewegungen des Wagenkastens wird der Neigeschlitten 3 durch einen Antrieb 9 in Bezug zum Wagenkasten 1 seitwärts und gleichzeitig durch die Führungsbahnen 5 bzw. 5' nach oben bewegt. Der Antrieb erfolgt in an sich bekannter Weise durch ein lineares Stellglied 9.1 in Form eines Hydraulikzylinders, der von einer Druckmittelquelle 9.2 gespeist wird. Es versteht sich jedoch, dass bei anderen Varianten der Erfindung auch ein anderer Antrieb gewählt sein kann. Vorzugsweise erfolgt der Antrieb beispielsweise durch einen Elektromotor, der über ein umlaufendes, formschlüssiges Treibmittel, beispielsweise eine Kette und/oder Zahnriemen die Drehbewegung in eine Längsbewegung am Neigeschlitten umsetzt.

Der Antrieb 9 ist zwischen Wagenkasten 1 und Neigeschlitten 3 einseitig oder redundant auf beiden Seiten angeordnet. Die Vorgabe für die Bewegung des Stromabnehmers 2 wird von einem Wagenkasten-Neigerechner 10 (WNR) an die Steuerung 9.3 des Neigeschlittens 3 übermittelt, welche wiederum die Druckmittelquelle 9.2 und damit das Stellglied 9.1 ansteuert. Die Istposition des Neigeschlittens 3 wird durch einen entsprechenden Positionssensor 9.4 erfasst, der im vorliegenden Fall am Stellglied 9.1 angeordnet ist, und an den WNR 10 zurückgemeldet. Die Rückstellung des Neigeschlittens 3 erfolgt analog, jedoch unterstützt durch die Gravitationskräfte, des angehobenen Neigeschlittens 3.

Um einen reibungslosen Übergang zwischen dem ersten und zweiten Führungsabschnitt bzw. dem dritten und vierten Führungsabschnitt zu gewährleisten, weist der erste bzw. zweite Übergangabschnitt 5.5 bzw. 5.5' jeweils einen an den Radius der Führungsrolle 6 bzw. 6' angepassten Krümmungsradius auf. Die Auslenkung des Neigeschlittens 3 wird durch Endanschläge 5.6 und 5.7 bzw. 5.6' und 5.7' der Führungsbahn 5 bzw. 5' begrenzt.

Wie aus Figur 1 ersichtlich ist, bewirkt jegliche Auslenkung des Neigeschlittens 3 bei nicht geneigtem Wagenkasten 1, dass eine der Führungsrollen 6 bzw. 6' in vertikaler Richtung angehoben wird, während die andere Führungsrolle lediglich horizontal gleitet. Fällt die auslenkende Kraft weg, wird der Neigeschlitten 3 dank der erfindungsgemäßen Gestaltung der Führungsbahnen 5 und 5' durch die einwirkende Schwerkraft wieder in seine in Figur 1 dargestellte Mittelstellung rückgestellt. Fällt der Antrieb 9 für die Rückstellung des Neigeschlittens 3 und damit des Stromabnehmers 2 in die Mittelstellung aus, erfolgt die Rückstellung somit automatisch durch die Gravitationskraft. Für diesen Fall kann dann eine automatisch einrastende Halteeinrichtung vorgesehen sein, die den Neigeschlitten drei in dieser Mittelstellung hält.

Die Führungsbahnen 5 und 5' sind geometrisch so ausgelegt, dass sich die Mittelachse 11 des Stromabnehmers 2 immer im Momentanzentrum des Wagenkastens 1 befindet und dass der Neigewinkel α nahezu exakt kompensiert wird. Durch die in diesem Ausführungsbeispiel gewählte Form der Führungsbahnen 5, 5' wird der Neigewinkel α zwar nicht exakt kompensiert, die Abweichungen von einer Geraden sind aber so minimal, dass auf eine exakte Ausführung, die aufwendiger herzustellen wäre, verzichtet werden kann. In der gesamten Neigeeinrichtung und auch im Stromabnehmer 2 ist ausreichend Spiel bzw. Flexibilität vorhanden, dass die geringen Abweichungen eine untergeordnete Rolle spielen.

Die Führungsbahnen müssen nicht geknickt ausgebildet sein, wie dies im Ausführungsbeispiel aus den Figuren 1 und 2 der Fall ist. Vielmehr können sie vom Anfangs- zum Endpunkt auch als schräg ansteigende Gerade oder auch als Kreisbogen oder eine sonstige Kurvenbahn ausgeführt sein.

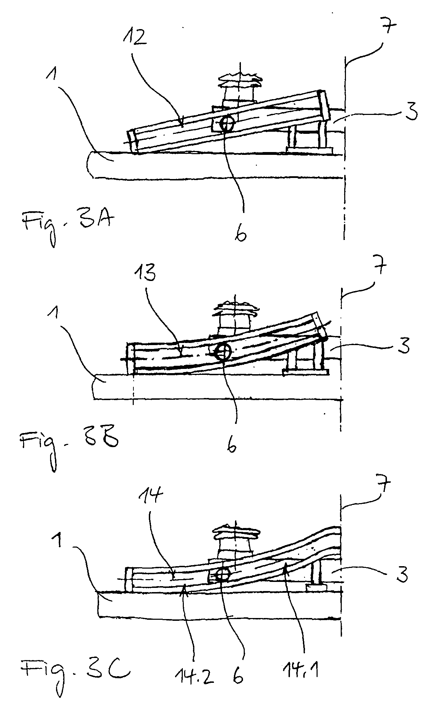

Beispiele hierfür sind in den Figuren 3A bis 3C als schematische hälftige Teildarstellungen weiterer bevorzugter Ausführungsformen der erfindungsgemäßen Neigeeinrichtung mit dem Neigeschlitten 3 und den Wagenkasten 1 aus Figur 1 dargestellt. Dabei ist der Neigeschlitten 3 jeweils in seiner Mittelstellung bei nicht geneigtem Wagenkasten 1 dargestellt.

Figur 3A zeigt eine Ausführung mit einer rein linearen Führungsbahn 12, während in Figur 3B eine Ausführung mit einer kreisbahnförmigen Führungsbahn 13 dargestellt ist. Figur 3C zeigt schließlich eine Ausführung mit einer frei gekrümmten Führungsbahn 14, an der sowohl der erste Führungsabschnitt 14.1 und der zweite Führungsabschnitt 14.2 als auch die dazu bezüglich der Hochachse 7 jeweils symmetrische dritte und vierte Führungsabschnitt ausgebildet ist, der in Figur 3C jeweils nicht dargestellt ist.

## Patentansprüche

1. Neigeeinrichtung für einen Stromabnehmer (2) eines Fahrzeugs mit einem gegenüber einem Fahrweg neigbaren Wagenkasten (1), insbesondere eines Schienenfahrzeugs, mit einem Neigeschlitten (3) zur Aufnahme des Stromabnehmers (2), der über wenigstens ein Führungselement (6, 6') durch wenigstens eine mit dem Wagenkasten (1) verbindbare Führungsbahn (5, 5'; 12; 13; 14) geführt ist, die zur im Wesentlichen fahrwegfesten Ausrichtung des Stromabnehmers (2) ausgebildet ist, **dadurch gekennzeichnet, dass** die Führungsbahn (5, 5'; 12; 13; 14) wenigstens einen benachbart der Hochachse (7) des Wagenkastens (1) angeordneten ersten Führungsabschnitt (5.3; 14.1) aufweist, der sich zur Hochachse (7) des Wagenkastens (1) hin von einer senkrecht zur Hochachse (7) des Wagenkastens (1) stehenden Bezugsebene (8) entfernt, wobei er einen linearen oder zur Bezugsebene (8) hin gewölbten Verlauf aufweist.

2. Neigeeinrichtung nach Anspruch 1, **dadurch gekennzeichnet, dass** die Führungsbahn (5, 5'; 12; 13; 14) einen zweiten Führungsabschnitt (5.4; 14.2) aufweist, der auf der der Hochachse (7) abgewandten Seite des ersten Führungsabschnitts (5.3; 14.1) an den ersten Führungsabschnitt (5.3; 14.1) angrenzt und einen Verlauf aufweist, der vom Verlauf des ersten Führungsabschnitts (5.3; 14.1) abweicht, wobei der zweite Führungsabschnitt (5.4; 14.2) insbesondere einen Krümmungsverlauf aufweist, der sich vom Krümmungsverlauf des ersten Führungsabschnitts (5.3; 14.1) unterscheidet.

3. Neigeeinrichtung nach Anspruch 2, **dadurch gekennzeichnet, dass** der zweite Führungsabschnitt (5.4) parallel zur Bezugsebene verläuft.

4. Neigeeinrichtung nach Anspruch 2 oder 3, **dadurch gekennzeichnet, dass** das Führungselement (6) in der bei nicht geneigtem Wagenkasten (1) einzunehmenden Mittelstellung des Neigeschlittens (3) im Übergangsbereich (5.5) zwischen dem ersten Führungsabschnitt (5.3) und dem zweiten Führungsabschnitt (5.4) angeordnet ist.

5. Neigeeinrichtung nach einem der vorhergehenden Ansprüche, **dadurch gekennzeichnet, dass** ein dritter Führungsabschnitt (5.3') vorgesehen ist, der bezüglich der Hochachse (7) des Wagenkastens (1) symmetrisch zum ersten Führungsabschnitt (5.3) ausgebildet ist, wobei der dritte Führungsabschnitt (5.3') an der ersten Führungsbahn oder an einer zweiten Führungsbahn (5') ausgebildet ist.

6. Neigeeinrichtung nach einem der Ansprüche 2 bis 5, **dadurch gekennzeichnet, dass** ein vierter Führungsabschnitt (5.4') vorgesehen ist, der bezüglich der Hochachse (7) des Wagenkastens (1) symmetrisch zum zweiten Führungsabschnitt (5.4) ausgebildet ist, wobei der vierte Führungsabschnitt (5.4') an der ersten Führungsbahn oder an einer zweiten Führungsbahn (5') ausgebildet ist.

7. Neigeeinrichtung nach einem der vorhergehenden Ansprüche, **dadurch gekennzeichnet, dass** die wenigstens eine Führungsbahn (5, 5') derart ausgebildet und angeordnet ist, dass die Mittelachse (11) des Stromabnehmers (2) unabhängig von der Neigeposition durch das Momentanzentrum der Neigungsbewegung des Wagenkastens (1) verläuft.

8. Neigeeinrichtung nach einem der vorhergehenden Ansprüche, **dadurch gekennzeichnet, dass** der Neigeschlitten (3) und die wenigstens eine Führungsbahn (5, 5') zur exakten Kompensation der Neigung des Wagenkastens (1) am Stromabnehmer (2) ausgebildet sind.

9. Neigeeinrichtung nach einem der vorhergehenden Ansprüche, **dadurch gekennzeichnet, dass** der erste Führungsabschnitt (5.3; 14.1) und der zweite Führungsabschnitt (5.4; 14.2) eine geradlinige Führung oder eine kurvenbahnförmige, insbesondere kreisbahnförmige, Führung ausbilden.

10. Neigeeinrichtung nach einem der vorhergehenden Ansprüche, **dadurch gekennzeichnet, dass** die mindestens eine Führungsbahn (5, 5') derart ausgebildet ist, dass die Rückstellung des Neigeschlittens (3) in seine bei nicht geneigtem Wagenkasten (1) einzunehmende Mittelstellung durch die Schwerkraft zumindest unterstützt wird.

11. Neigeeinrichtung nach einem der vorhergehenden Ansprüche, **dadurch gekennzeichnet, dass** wenigstens ein mit dem Neigeschlitten (3) verbundenes Stellglied (9.1) vorgesehen ist, das zumindest zur Unterstützung der Auslenkung und/oder Rückstellung des Neigeschlittens ausgebildet ist, wobei insbesondere ein Wagenkasten-Neigerechner (10) zur Ansteuerung des Stellglieds (9.1) vorgesehen ist.

12. Neigeeinrichtung nach einem der vorhergehenden Ansprüche, **dadurch gekennzeichnet, dass** die Führungsbahn (5, 5') durch eine nut- oder schlitzförmige Ausnehmung (5.1, 5.1') eines Führungskörpers (5.2, 5.2') gebildet ist, in der das Führungselement (6, 6') geführt ist.

13. Fahrzeug, insbesondere Schienenfahrzeug, mit einem gegenüber einem Fahrweg neigbaren Wagenkästen (1) und einen Stromabnehmer (2), die über eine Neigeeinrichtung nach einem der vorhergehenden Ansprüche verbunden sind.
